# EUROPÄISCHE PATENTSCHRIFT

(11) **EP 3 087 324 B1**
(45) Veröffentlichungstag und Bekanntmachung des Hinweises auf die Patenterteilung: **05.07.2017**
(21) Anmeldenummer: 14838914.1
(22) Anmeldetag: 23.12.2014
(51) Int. Cl.: F23R 7/00, F23C 99/00

(54) **ANORDNUNG UND VERFAHREN ZUR DURCHFÜHRUNG EINER INTENSIVIERTEN VERBRENNUNG**
ARRANGEMENT AND PROCESS FOR CARRYING OUT AN INTENSIFIED COMBUSTION
DISPOSITIF ET PROCÉDÉ POUR LA MISE EN OEUVRE D'UNE COMBUSTION INTENSIFIÉE

(30) Priorität: 23.12.2013 DE 102013114852
(43) Veröffentlichungstag der Anmeldung: 02.11.2016
(73) Patentinhaber: Fraunhofer-Gesellschaft zur Förderung der angewandten Forschung e.V., 80686 München (DE)
(72) Erfinder: KRIEGEL, Ralf, 07768 Kahla (DE); KIRCHEISEN, Robert, 07749 Jena (DE); LAMPINEN, Markku, FI-20740 Turku (FI); RISTIMÄKI, Ville, FI-20100 Turku (FI)
(74) Vertreter: Oehmke, Volker
(86) Internationale Anmeldenummer: PCT/DE2014/100463
(87) Internationale Veröffentlichungsnummer: WO 2015/096833

(56) Entgegenhaltungen:
- WO-A1-2011/062728
- US-A- 5 447 024
- US-B1- 8 555 652

## Beschreibung

Die Erfindung betrifft eine Verbrennungskraftmaschine und ein Verfahren zur Energiegewinnung mittels Expansionsarbeit bei Verbrennungskraftmaschinen.

Der energetische Nutzen des selbstverdichtenden Verbrennungsprozesses (nachfolgend SCC-Prozess, von Self-acting Compacting Combustion, genannt) wurde zuerst von Lampinen in der WO 2012/153003 A1 beschrieben. Er resultiert aus der Tatsache, dass eine selbsttätige Verdichtung von Verbrennungsgasen stattfindet, wenn eine spezielle ionenleitende Membran für den Eintritt von Sauerstoff und Stickstoff in den Verbrennungsraum durch die heiße Reaktorwandung sorgt. Die Triebkraft für den Transport des Sauerstoffs (O₂) resultiert hauptsächlich aus dem niedrigen O₂-Partialdruck im Verbrennungsraum. Deshalb ist die übliche Verdichtung der Verbrennungsluft nicht mehr erforderlich, der Anteil an nutzbarer Expansionsarbeit wird größer. Dementsprechend wird der theoretisch erreichbare Wirkungsgrad einer Verbrennungskraftmaschine signifikant erhöht.

Da für hocheffiziente Verbrennungskraftmaschinen hohe Drücke und Temperaturen angestrebt werden, ist ein entsprechender SCC-Prozess durch hohe Anforderungen an die Stabilität der eingesetzten Membrankomponenten charakterisiert. Keramische Membranen sind normalerweise spröde und sollten zur Realisierung hoher Flüsse möglichst dünnwandig sein. Dies steht im Widerspruch zu der für den SCC-Prozess erforderlichen hohen mechanischen Stabilität, insbesondere wenn hohe Wirkungsgrade und die dafür erforderlichen hohen Verbrennungsdrücke und Verbrennungstemperaturen angestrebt werden. Dementsprechend sollte ein SCC-Prozess unter Verwendung keramischer Membranen auf Drücke unter 100 bar oder darunter beschränkt sein. Außerdem führt die Ankopplung einer Verbrennungskraftmaschine zu periodischen Modifikationen des Verbrennungsprozesses, insbesondere zu Schwankungen der Temperatur und des Drucks. Die resultierenden Vibrationen können die mechanische Integrität der Membranen gefährden.

Die für den Einsatz als OTM (Oxygen Transport Membrane) etablierten Materialien, wie BSCF (Ba_{0,5}Sr_{0,5}Co_{0,8}Fe_{0,2}O_{3-δ}), sind bekannt für ihren hohen Sauerstofffluss, der auf ihrer gemischten Leitfähigkeit (MIEC - Mixed Ionic-Electronic Conductivity) basiert. BSCF ist jedoch auch bekannt für die Zersetzung der zugrundeliegenden Kristallphase unterhalb 830 °C (Shao, Z., et al: Investigation of the permeation behavior and stability of a Ba0.5Sr0.5Co0.8Fe0.2O3-δ oxygen membrane. Journal of Membrane Science 172 (2000), S. 177 - 188). Höhere Temperaturen führen darüber hinaus zu deutlich höheren Kriechraten des Materials, so dass ein mechanisches Versagen bereits für 900 °C und 20 bar Druckdifferenz vorhergesagt wurde (Pecanac, G., et al: Mechanical properties and lifetime predictions for Ba0.5Sr0.5Co0.8Fe0.2O3-δ membrane material. Journal of Membrane Science 385-386 (2011), S. 263- 268). Außerdem enthalten solche auf dem Perowskit-Strukturtyp basierenden MIEC-Materialien hohe Anteile an Erdalkalien, deren Reaktion mit CO₂ zu einer starken Absenkung des Sauerstoffflusses mit steigendem CO₂-Gehalt führt (Schulz, M., et al: Assessment of CO2 stability and oxygen flux of oxygen permeable membranes. Journal of Membrane Science 378 (2011), S. 10- 17).

Darüber hinaus führt die adiabatische Verbrennung von Brennstoffen typischerweise zu Gastemperaturen weit über 2000 °C. Obwohl die Temperatur der Membran niedriger liegen wird, sollten deshalb Hochtemperaturmaterialien auf der Basis von ZrO₂ oder CeO₂ eingesetzt werden. Der Sauerstofffluss solcher Materialien liegt jedoch deutlich niedriger als derjenige der Perowskite (Sunarso, J., et al: Mixed ionic-electronic conducting (MIEC) ceramic-based membranes for oxygen separation. Journal of Membrane Science 320 (2008), 13-41). Eine Abkühlung der Verbrennungsgase oder der Membranwandung scheint zwar prinzipiell möglich, verkompliziert aber die technische Umsetzung und senkt den Wirkungsgrad.

Eine Realisierung sehr hoher Drücke beim SCC-Prozess unter Verwendung keramischer OTM-Membranen scheint nur möglich, wenn die Drücke auf beiden Seiten der Membran gleich sind. In diesem Fall wäre das gesamte Membranmaterial unter Druckspannung, es gäbe keine unter Zugspannung stehenden Bereiche, so dass eine hohe Lebensdauer der Membran erwartet werden kann. Eine solche Belastungssituation ist für den SCC-Prozess jedoch nicht sinnvoll, da eine entsprechende Kompression der Luft die zusätzlich nutzbare Expansionsarbeit verbrauchen würde. Es ist insgesamt festzustellen, dass für die angestrebten hohen Temperaturen und Drücke des SCC-Prozesses keine Membranmaterialien mit ausreichend hoher Sauerstoffpermeation und Stabilität verfügbar sind.

Materialien für OTM sind häufig auch in der Lage, Sauerstoff reversibel zu speichern, also als Sauerstoffspeichermaterial (nachfolgend als OSM von Oxygen Storage Materials bezeichnet) zu fungieren. Der Sauerstoff wird dabei im Kristallgitter des festen Materials eingebaut. Unterschiedliche OSM und unterschiedliche Verfahren wurden bisher beansprucht oder beschrieben, als Verfahren z. B. das sogenannte Chemical Looping Combustion (CLC: US 5 447 024 A; Hossain, M. M., de Lasa, H. I.: Chemical looping combustion (CLC) for inherent CO2 separations - a review. Chemical Engineering Science 63 (2008), 4433-4451) und das Ceramic Autothermal Recovery (CAR: EP 0 913 184 B1; Ullmann, H., et al: Oxidkeramiken mit hohem Sauerstofftransport. Keramische Zeitschrift 57 (2005) 2, 72 - 78). Außerdem wurden unterschiedliche Materialzusammensetzungen, basierend auf Perowskiten und Fluoriten, als OSM beansprucht (JP 05004044 A, EP 1 547 972 A3, US 6 059 858 A, DE 10 2005 034 071 A1), häufig kombiniert mit bestimmten Verfahren wie der Gasreinigung (JP 05004044 A, JP 04164803 A) oder zusammen mit einer bestimmten Verfahrensführung unter Verwendung spezieller Gase (US 6 464 955 B2, EP 0 995 715 A1).

Aufgrund der entsprechenden chemischen Reaktionen der OSM mit Sauerstoff entspricht die Beladung einer Oxidation der Entladung einer Reduktion des OSM. Der erstere Prozess ist immer exotherm, der letztere stets endotherm. Deshalb ist eine zyklische Be- und Entladung von OSM immer begleitet durch Wärmefreisetzung und Wärmeverbrauch (Kaps, C., Kriegel, R.: Perovskite ceramics as smart materials for efficient energy technologies. in: Proceedings of the 2. International Congress on Ceramics. Verona, Italy. 29.06. - 04.07.2008).

Die Enthalpie für Reduktion bzw. Oxidation der OSM hängt erheblich von deren chemischer Zusammensetzung ab, insbesondere von der Art des Metalls, das durch seinen Wertigkeitswechsel das Lade- und Entladeverhalten dominiert. Ein leichter Wertigkeitswechsel geht typischerweise einher mit einer niedrigen Oxidationsenthalpie von ca. -50 kJ pro mol O₂, z. B. bei Eisen- oder Cobalt-basierten mischleitenden Oxiden des Perowskittyps. Mn- und Cr-basierte OSM zeigen hingegen Oxidationsenthalpien bis ca. -350 kJ pro mol O₂. Deshalb verwendet z. B. das auf eine energieeffiziente Sauerstofferzeugung ausgerichtete CAR-Verfahren (US 6 059 858 A) vor allem Co- und Fe-basierte Mischoxide, um bei möglichst geringen Änderungen der O₂-Partialdrücke möglichst große O₂-Mengen zu erzeugen. Dementsprechend bleibt dabei die Temperaturänderung der entsprechenden Co- und Fe-haltigen OSM niedrig.

Ein zyklischer Verbrennungsprozess unter Verwendung von OSM erzeugt große Wärmemengen, die partiell auch in das OSM eingetragen werden. Es erscheint deshalb schwierig, die Temperatur eines mit OSM gefüllten Reaktors niedrig zu halten, insbesondere wenn die Zykluszeit sehr kurz ist. Dies kann insbesondere für unter Druck stehende Gase in Verbrennungskraftmaschinen erwartet werden.

Der Erfindung liegt die Aufgabe zugrunde, eine Möglichkeit zur energieeffizienten Sauerstoffzuführung in den Verbrennungsraum einer selbstverdichtenden Verbrennungskraftmaschine anzugeben.

Erfindungsgemäß wird die Aufgabe mit einer Anordnung zur Durchführung einer intensivierten Verbrennung, zur selbsttätigen Druckerhöhung der Verbrennungsgase und deren Nutzung in einer Verbrennungskraftmaschine zur Verrichtung mechanischer Arbeit dadurch gelöst, dass im Verbrennungsraum ein Sauerstoffspeichermaterial vorhanden ist, so dass durch die Einlagerung des Sauerstoffs im Sauerstoffspeichermaterial im Verbrennungsraum ein selbstverdichtender Verbrennungsprozess möglich wird.

Vorteilhafte Ausgestaltung einer Verbrennungskraftmaschine mit einem Arbeitsraum ergibt sich dadurch, dass der Arbeitsraum aus mindestens zwei Reaktionsräumen besteht, wobei jeder Reaktionsraum ein Sauerstoffspeichermaterial enthält und mindestens Eingänge für einen Treibstoff und Frischluft, einen ersten Ausgang zur Abgabe der an Sauerstoff abgereicherten Luft und einen zweiten mit einem Ventil versehenen Ausgang zur Abgabe der Verbrennungsgase aufweist. Darüber hinaus stehen alle zweiten Ausgänge über einen Eingang mit einem nachgeordneten Arbeitsraum in Verbindung, wobei jeweils nur ein Ventil zur Einleitung der Verbrennungsgase in den Arbeitsraum geöffnet ist. Unter Arbeitsraum soll jeglicher Raum verstanden sein, in dem die unter hohem Druck und unter hohen Temperaturen stehenden Verbrennungsgase mechanische Arbeit verrichten können, also insbesondere von Verbrennungskraftmaschinen oder Turbinen .

Ferner wird die Aufgabe mit einem Verfahren zur Durchführung einer intensivierten Verbrennung, zur selbsttätigen Druckerhöhung der Verbrennungsgase und deren Nutzung in einer Verbrennungskraftmaschine zur Verrichtung mechanischer Arbeit dadurch gelöst, dass
- im Verbrennungsraum ein Sauerstoffspeichermaterial eingelagert wird,
- Frischluft zugeführt wird, wobei das Sauerstoffspeichermaterial der Frischluft den Sauerstoff entzieht,
- anschließend Treibstoff zugeführt wird, welcher vollständig mit dem aus dem Sauerstoffspeichermaterial austretenden Sauerstoff verbrennt,
- abschließend die unter hohem Druck und hoher Temperatur stehenden Verbrennungsgase zur Verrichtung von mechanischer Arbeit genutzt werden.
Vorteilhafte Ausgestaltung des erfindungsgemäßen Verfahrens zur Energiegewinnung mittels Expansionsarbeit bei Verbrennungskraftmaschinen mit mindestens zwei Reaktionsräumen ist durch die folgenden Verfahrensschritte gekennzeichnet:
a) ein erster Reaktionsraum wird mit Frischluft durchsetzt, so dass das im Reaktionsraum befindliche Sauerstoffspeichermaterial der Frischluft den Sauerstoff entzieht;
b) nach Sättigung des Sauerstoffspeichermaterials mit Sauerstoff wird die Frischluftzufuhr unterbrochen und es wird ein Treibstoff in den Reaktionsraum eindosiert, welcher zündet und durch den aus dem Sauerstoffspeichermaterial austretenden Sauerstoff vollständig verbrannt wird;
c) die unter Druck stehenden Verbrennungsgase werden einer Strömungsmaschine zugeführt;
d) die Schritte a) bis c) werden nacheinander für weitere Reaktionsräume durchgeführt, wobei die Anzahl der weiteren mindestens dadurch bestimmt ist, dass der erste Reaktionsraum durch Sättigung mit Sauerstoff seine Frischluftzufuhr unterbrochen hat.

Die vorliegende Erfindung überwindet die geschilderten Nachteile des Standes der Technik, indem Sauerstoffspeichermaterialien mit einer Reduktionsenthalpie über 150 kJ/mol O₂ eingesetzt werden, die Wiederbeladung nach dem Verbrennungsvorgang zeitlich ausgedehnt und ein Überschuss an Luft zur Kühlung eingesetzt wird sowie zur internen Kühlung Wasser in flüssiger oder gasförmiger Form zugegeben wird.

Die Verbrennungswärme für Kohlenwasserstoffe beträgt für deren Hauptbestandteil, die CH₂-Gruppe, ca. -650 kJ/mol. Eineinhalb Mol Sauerstoff werden für die Verbrennung einer CH₂-Gruppe in Wasser und CO₂ benötigt. Eine Normalisierung der Verbrennungsenthalpie von Kohlenwasserstoffen auf die umgesetzte Sauerstoffmenge ergibt somit einen Wert von ca. -430 kJ/mol umgesetzten Sauerstoff. Deshalb erscheint es möglich, einen Großteil der im Verbrennungsprozess frei werdenden Reaktionswärme durch die Reduktion des Sauerstoffspeichermaterials zu kompensieren, wenn dessen Oxidationsenthalpie vergleichbar ist. Zusätzlich kann flüssiges Wasser oder Dampf eingesetzt werden, um die Temperatur des Sauerstoffspeichermaterials während der Verbrennung niedrig zu halten.

Die vorliegende Erfindung beansprucht eine technische Lösungsvariante des SCC-Prozesses unter Verwendung eines Sauerstoffspeichermaterials, das als poröser Körper oder als Schüttbett in mindestens zwei gekoppelten Reaktionsräumen eingesetzt wird. Die Verbrennung des Treibstoffs wird in mindestens einem Reaktionsraum durchgeführt, der ein mit Sauerstoff beladenes Sauerstoffspeichermaterial enthält. Das Sauerstoffspeichermaterial setzt den Sauerstoff ohne wesentliche Volumenänderung während des Verbrennungsvorgangs frei. Der freigesetzte Sauerstoff reagiert mit dem Treibstoff und heizt dadurch das Sauerstoffspeichermaterial und den Reaktionsraum auf. Dementsprechend steigen Gasdruck und Temperatur im Reaktionsraum, bis der Treibstoff vollständig oxidiert oder die Speicherkapazität des Sauerstoffspeichermaterials erschöpft ist. Danach wird ein anderes Sauerstoffspeichermaterial für die Verbrennung des Treibstoffs genutzt. Das entladene Sauerstoffspeichermaterial wird mit einem Überschuss an Frischluft regeneriert.

Die Erfindung soll nachstehend anhand von Ausführungsbeispielen näher erläutert werden. Hierzu zeigt

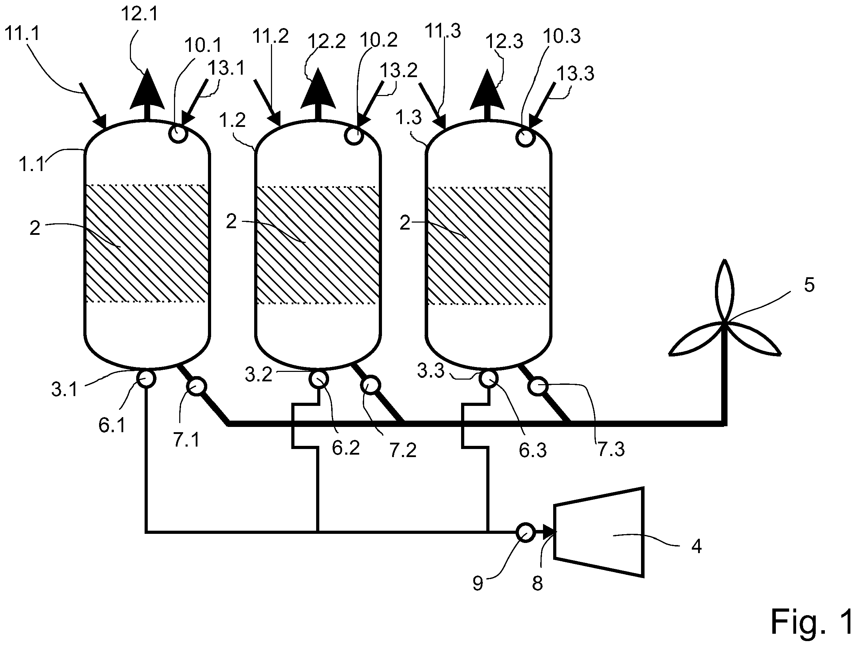

Fig. 1 ein Schema eines SCC-Prozesses.

Gemäß Fig. 1 sind als wesentliche Bestandteile einer Verbrennungskraftmaschine drei Reaktionsräume 1.1, 1.2 und 1.3 mit jeweils eingelagertem Sauerstoffspeichermaterial 2, ein Arbeitsraum 4 zur Verrichtung der mechanischen Arbeit zu erkennen. Der Arbeitsraum 4 kann dabei einer Gasturbine zugehörig sein, die ihrerseits einen Generator (nicht in Fig. 1 gezeigt) zur Erzeugung von elektrischer Energie antreibt. Ein Lüfter 5 ist über Rohrleitungen mit jedem einzelnen Reaktionsraum 1.1, 1.2 und 1.3 zur Frischluftzuführung verbunden, wobei jeder Reaktionsraum 1.1, 1.2 und 1.3 einen ersten Ausgang 12.1, 12.2, 12.3 zur Abführung der an Sauerstoff abgereicherten Luft, einen zweiten Ausgang 3.1, 3.2, 3.3 zur Abführung der Verbrennungsgase und zwei weitere Eingänge aufweist. Der eine Eingang 11.1, 11.2, 11.3 zum Einlass für den Treibstoff und der andere Eingang 13.1, 13.2, 13.3 für den Einlass von Wasser oder Wasserdampf.

### Ausführungsbeispiel 1:

Für die selbstverdichtende Verbrennung von Erdgas werden, gemäß Fig. 1, drei Reaktionsräume 1.1, 1.2 und 1.3 verwendet. Jeder Reaktionsraum 1.1, 1.2 und 1.3 besitzt ein Innenvolumen von 1,8 Liter, das mit 1 kg Sauerstoffspeichermaterial 2 gefüllt wurde. Für das Sauerstoffspeichermaterialschüttbett wird ein Granulat von CSFM5555 (Ca_{0.5}Sr_{0.5}Mn_{0.5}Fe_{0.5}O_{3-δ}) mit einer offenen Porosität von 30 Vol-% und einer Dichte von 3,67 g/cm³ eingesetzt. Das Rohmaterial wird über konventionelle keramische Mischoxidtechnologie hergestellt und nachfolgend mit Kartoffelstärke als Porenbildner gemischt. Die Masse wird durch Extrusion bzw. Strangpressen zu Strängen mit ca. 4 mm Durchmesser bei Längen von 10-15 mm ausgeformt. Die Sinterung erfolgt bei 1430°C in 3 Stunden. Die Oxidationsenthalpie des so gefertigten Sauerstoffspeichermaterials beträgt ca. -280 kJ/mol O₂.

Die drei Reaktionsräume 1.1, 1.2 und 1.3 sind jeweils über ihre zweiten Ausgänge 3.1, 3.2 und 3.3 mit einem Arbeitsraum 4 durch möglichst kurze Rohrleitungen mit geringem Innendurchmesser verbunden. Die Rohrleitungen zwischen Lüfter 5 und Reaktionsräumen 1.1, 1.2 und 1.3 haben deutlich größere Durchmesser, um Druckverluste zu minimieren und große Luftdurchsätze bei Umgebungsdruck zu ermöglichen. Alle Verbindungsstellen zwischen den Rohrleitungen sind mit Ventilen 6.1, 6.2, 6.3, 7.1, 7.2, 7.3, die als elektromagnetische Ventile oder Rückschlagventile ausgebildet sein können, ausgestattet. An einem Eingang 8 des Arbeitsraumes 4 ist ein Druckreduzierventil 9 angeordnet. Die äußeren Hüllen der Reaktionsräume 1.1, 1.2, und 1.3 sind wassergekühlt und an einen Kühlkreislauf angeschlossen. Zusätzlich sind alle Reaktionsräume 1.1, 1.2 und 1.3 mit den Zerstäuberdüsen 10.1, 10.2, 10.3 für die Injektion von flüssigem Wasser oder Dampf ausgestattet.

Der SCC-Prozess wird gestartet durch Anheizen der Reaktionsräume 1.1, 1.2, und 1.3 mit einem nichtdargestellten Erdgasbrenner. Während des Aufheizens sollte mindestens ein Sauerstoffgehalt von 5 Vol-% im Abgas realisiert werden, um eine Entladung der Sauerstoffspeichermaterialschüttung während des Aufheizens zu vermeiden. Nach Erreichen einer Temperatur von 650 °C im ersten Reaktionsraum 1.1 werden in diesen 4,8 Normliter Erdgas bei einem Vordruck von 15 bar über seinen Eingang 11.1 injiziert. Die Verbrennung des Treibstoffes verbraucht Sauerstoff, der vom Sauerstoffspeichermaterial 2 geliefert wird. Dadurch wird der Sauerstoffgehalt z in der Sauerstoffspeichermaterialschüttung von 2,84 auf 2,70 (z in ABO_{z}) erniedrigt. Die sehr schnell ablaufende Verbrennung erzeugt eine Gastemperatur von mehr als 3500 °C und einen Druck von mehr als 110 bar. Etwa 15 g Wasser werden über einen weiteren Eingang 13.1 zusätzlich in die Verbrennungszone eingespritzt, so dass die Verbrennungstemperatur um ca. 800 K absinkt und der Druck auf 210 bar steigt. Die unter hohem Druck stehenden Verbrennungsgase und der Dampf werden in den Arbeitsraum 4 geleitet, der Bestandteil einer Strömungsmaschine ist, die ihrerseits einen Generator zur Erzeugung von elektrischem Strom antreibt. Die Strömungsmaschine ist ohne Kompressionsteil und ohne Zuleitung von Verbrennungsluft ausgeführt bzw. diese Komponenten werden nicht genutzt. Wenn der Druck unter 15 bar fällt, wird in den zweiten Reaktionsraum 1.2 Erdgas über seinen Eingang 11.2 eindosiert und wie oben beschrieben verbrannt. Die Temperatur der Sauerstoffspeichermaterialschüttungen wird permanent überwacht und geregelt, indem variierende Wassermengen über die Eingänge 10.1, 10.2, 10.3 eingedüst werden. Dabei wird eine Maximaltemperatur der Sauerstoffspeichermaterialschüttung von 1200 °C angestrebt.

Nach jedem Verbrennungsvorgang wird die entladene Sauerstoffspeichermaterialschüttung mit Frischluft regeneriert. Typischerweise beträgt der Luftdurchsatz das zwei- bis vierfache der Menge, die theoretisch für die Reoxidation des gesamten Sauerstoffspeichermaterials erforderlich wäre. Der Überschuss an kalter Luft wird eingesetzt, um die Schüttungstemperatur auf einem konstanten Niveau zu halten.

### Ausführungsbeispiel 2:

Für eine selbstverdichtende Verbrennung von Benzen werden drei Reaktionsräume 1.1, 1.2 und 1.3 mit einem inneren Volumen von jeweils 0,6 Liter eingesetzt. Die Reaktionsräume 1.1, 1.2 und 1.3 werden mit je 1 kg CaMnO₃ in Form einer Schüttung von Miniwaben gefüllt, die ein freies Volumen von 65 Vol-% und eine Schüttdichte von 2.5 g/cm³aufweisen. Das Rohmaterial wird durch konventionelle keramische Mischoxidtechnologie hergestellt und durch steifplastische Extrusion einer wässrig plastifizierten Masse zu Miniwaben der Abmessungen 8 x 8 mm ausgeformt, wobei die Stränge automatisch in kurze Stücke von ca. 8 mm Länge geschnitten werden. Die Sinterung erfolgt bei 1450 °C für 3 Stunden. Danach werden die Sauerstoffspeichermaterialminiwaben mit einer wässrig basierten Suspension von 25 mol-% Gd₂O₃ und 75 mol-% NiO beschichtet, um das Verkoken der Oberfläche zu minimieren. Die Beschichtung wird bei 1000 °C in 2 Stunden eingebrannt. Die Oxidationsenthalpie des so gefertigten Materials beträgt ca. -300 kJ/mol O₂.

Die drei Reaktionsräume 1.1, 1.2 und 1.3 sind untereinander und mit einem Arbeitsraum 4 durch möglichst kurze Rohrleitungen mit geringem Innendurchmesser verbunden. Die Rohrleitungen zwischen Lüfter 5 und Reaktionsräumen 1.1, 1.2 und 1.3 haben deutlich größere Durchmesser, um Druckverluste zu minimieren und große Luftdurchsätze zu ermöglichen. Alle Verbindungsstellen zwischen den Rohrleitungen sind mit Ventilen 6.1, 6.2, 6.3, 7.1, 7.2, 7.3 ausgestattet. Vor dem Arbeitsraum 4 ist ein Druckreduzierventil 9 angeordnet. Die äußeren Hüllen der Reaktionsräume 1.1, 1.2 und 1.3 sind wassergekühlt und an einen Kühlkreislauf angeschlossen. Zusätzlich sind alle Reaktionsräume 1.1, 1.2 und 1.3 mit Zerstäuberdüsen an den Eingängen 10.1, 10.2, 10.3 für die Injektion von flüssigem Wasser oder Dampf ausgestattet.

Die Reaktionsräume 1.1, 1.2 und 1.3 werden zunächst durch Verbrennung des Benzens unter Luftüberschuss auf 600 °C vorgeheizt. Anschließend wird die Luftzufuhr geschlossen und 9 g Benzen werden in den ersten Reaktionsraum 1.1 eingespritzt. Der zerstäubte Treibstoff zündet und wird durch den aus der Sauerstoffspeichermaterialschüttung austretenden Sauerstoff vollständig oxidiert. Dadurch wird der Sauerstoffgehalt z der Sauerstoffspeichermaterialminiwaben von 2,95 auf 2,65 (z in ABO_{z}) abgesenkt. Die Verbrennungsgase erhitzen sich auf mehr als 4000 K, der Druck steigt auf mehr als 800 bar. Durch Einspritzen von ca. 30 g flüssigem Wasser kann die Gastemperatur um ca. 900 K gesenkt werden, wobei der Druck auf 1600 bar steigt.

Wie bereits im Ausführungsbeispiel 1 beschrieben, wird das unter hohem Druck stehende Gas für die Stromerzeugung in einer Strömungsmaschine eingesetzt.

Nach jedem Verbrennungsvorgang werden die entladenen Sauerstoffspeichermaterialminiwaben mit Frischluft regeneriert. Der Luftdurchsatz beträgt dabei typischerweise das Zwei- bis Vierfache des für die vollständige Reoxidation der gesamten Sauerstoffspeichermaterialschüttung erforderlichen Durchsatzes. Der Überschuss an kalter Frischluft wird eingesetzt, um die Sauerstoffspeichermaterialschüttung und die Reaktionsräume zu kühlen und die Temperatur auf einem konstanten Niveau zu halten.

Die Anzahl der Reaktionsräume 1.1, 1.2, 1.3 ist in den Ausführungsbeispielen 1 und 2 mit drei festgelegt. Grundsätzlich bestimmt sich die Anzahl durch das zeitliche Verhältnis zwischen Verbrennungsphase und Reoxidationsphase. Da die Verbrennungsphase wesentlich kürzer ist als die Reoxidationsphase, wird man eine entsprechende Anzahl von Reaktionsräumen wählen, um einen im Wesentlichen kontinuierlichen Gasstrom am Eingang 8 des Arbeitsraumes 4 realisieren zu können.

### Bezugszeichenliste

- 1.1: Reaktionsraum
- 1.2: Reaktionsraum
- 1.3: Reaktionsraum
- 2: Sauerstoffspeichermaterial
- 3.1: zweiter Ausgang
- 3.2: zweiter Ausgang
- 3.3: zweiter Ausgang
- 4: Arbeitsraum
- 5: Lüfter
- 6.1: Ventil
- 6.2: Ventil
- 6.3: Ventil
- 7.1: Ventil
- 7.2: Ventil
- 7.3: Ventil
- 8: Eingang (des Arbeitsraumes 4)
- 9: Druckreduzierventil
- 10.1: Zerstäuberdüsen
- 10.2: Zerstäuberdüsen
- 10.3: Zerstäuberdüsen
- 11.1: Eingang (für Treibstoff)
- 11.2: Eingang (für Treibstoff)
- 11.3: Eingang (für Treibstoff)
- 12.1: erster Ausgang
- 12.2: erster Ausgang
- 12.3: erster Ausgang
- 13.1: Eingang (für Wasser oder Wasserdampf)
- 13.2: Eingang (für Wasser oder Wasserdampf)
- 13.3: Eingang (für Wasser oder Wasserdampf)

## Patentansprüche

1. Anordnung zur Durchführung einer intensivierten Verbrennung, zur selbsttätigen Druckerhöhung der Verbrennungsgase und deren Nutzung in einer Verbrennungskraftmaschine zur Verrichtung mechanischer Arbeit, **dadurch gekennzeichnet, dass** im Verbrennungsraum ein Sauerstoffspeichermaterial (2) vorhanden ist.

2. Anordnung nach Anspruch 1, **dadurch gekennzeichnet, dass**
- der Verbrennungsraum aus mindestens zwei Reaktionsräumen (1.1, 1.2, 1.3) besteht, wobei jeder Reaktionsraum (1.1, 1.2, 1.3)
- das Sauerstoffspeichermaterial (2) enthält,
- mindestens einen Eingang (11.1, 11.2, 11.3) für einen Treibstoff und einen Eingang für Frischluft aufweist,
- einen ersten Ausgang (12.1, 12.2, 12.3) zur Abgabe der an Sauerstoff abgereicherten Luft aufweist,
- einen zweiten mit einem Ventil (6.1, 6.2, 6.3) versehenen Ausgang (3.1, 3.2, 3.3) zur Abgabe der Verbrennungsgase aufweist,
- jeder zweite Ausgang (3.1, 3.2, 3.3) über einen Eingang (8) mit einem nachgeordneten Arbeitsraum (4) in Verbindung steht, wobei jeweils nur ein Ventil (6.1, 6.2, 6.3) zur Einleitung der Verbrennungsgase in den Arbeitsraum (4) geöffnet ist.

3. Anordnung nach Anspruch 1 oder 2, **dadurch gekennzeichnet, dass** das Sauerstoffspeichermaterial (2) eine Reduktionsenthalpie für den Sauerstoffausbau zwischen 150 kJ/mol O₂ und 350 kJ/mol O₂ aufweist.

4. Anordnung nach Anspruch 1, **dadurch gekennzeichnet, dass** als Sauerstoffspeichermaterial (2) ein Granulat von Ca_{0.5}Sr_{0.5}Mn_{0.5}Fe₀.₅O_{3-δ} mit einer offenen Porosität von 30 Vol-% und einer Dichte von 3,67 g/cm³ verwendet wird.

5. Anordnung nach Anspruch 1 bis 4, **dadurch gekennzeichnet, dass** das Sauerstoffspeichermaterial (2) in Form eines Granulates als Schüttbett im Reaktionsraum (1.1, 1.2, 1.3) angeordnet ist.

6. Anordnung nach Anspruch 1 bis 5, **dadurch gekennzeichnet, dass** jeder Reaktionsraum (1.1, 1.2, 1.3) einen weiteren Eingang (13.1, 13.2, 13.3) zur Einspeisung von flüssigem oder gasförmigem Wasser aufweist, um eine interne Kühlung des Sauerstoffspeichermaterials (2) und des Inneren des Reaktionsraumes (1.1, 1.2, 1.3) zu erreichen und den Druck der Verbrennungsgase zu erhöhen.

7. Anordnung nach Anspruch 1 bis 6, **dadurch gekennzeichnet, dass** das Sauerstoffspeichermaterial (2) mit einem Katalysator kombiniert ist, um die Reaktionsgeschwindigkeit zu erhöhen oder die Schadstoffkonzentration zu senken.

8. Verfahren zur Durchführung einer intensivierten Verbrennung, zur selbsttätigen Druckerhöhung der Verbrennungsgase und deren Nutzung in einer Verbrennungskraftmaschine zur Verrichtung mechanischer Arbeit, **dadurch gekennzeichnet, dass**
- im Verbrennungsraum ein Sauerstoffspeichermaterial (2) eingelagert wird,
- Frischluft zugeführt wird, wobei das Sauerstoffspeichermaterial (2) der Frischluft den Sauerstoff entzieht,
- anschließend Treibstoff zugeführt wird, welcher vollständig mit dem aus dem Sauerstoffspeichermaterial (2) austretenden Sauerstoff verbrennt,
- abschließend die unter hohem Druck und hoher Temperatur stehenden Verbrennungsgase zur Verrichtung von mechanischer Arbeit genutzt werden.

9. Verfahren nach Anspruch 8 mit mindestens zwei Reaktionsräumen durch die folgenden Verfahrensschritte gekennzeichnet:
a) ein erster Reaktionsraum (1.1) wird mit Frischluft durchsetzt, so dass das im Reaktionsraum (1.1) befindliche Sauerstoffspeichermaterial (2) der Frischluft den Sauerstoff entzieht;
b) nach Sättigung des Sauerstoffspeichermaterials (2) mit Sauerstoff wird die Frischluftzufuhr unterbrochen und es wird ein Treibstoff in den Reaktionsraum (1.1) eindosiert, welcher mit dem aus dem Sauerstoffspeichermaterial (2) austretenden Sauerstoff vollständig verbrannt wird;
c) die unter Druck stehenden Verbrennungsgase werden einem Arbeitsraum (4) zugeführt;
d) die Schritte a) bis c) werden nacheinander für weitere Reaktionsräume durchgeführt, wobei die Anzahl der weiteren mindestens dadurch bestimmt ist, dass der erste Reaktionsraum (1.1) durch Sättigung mit Sauerstoff seine Frischluftzufuhr unterbrochen hat.

10. Verfahren nach Anspruch 8 oder 9, **dadurch gekennzeichnet, dass** die Temperatur des Sauerstoffspeichermaterials (2) überwacht und geregelt wird, indem variierende Wassermengen eingedüst werden.

11. Verfahren nach einem der Ansprüche 8 bis 10, **dadurch gekennzeichnet, dass** der Frischluftdurchsatz in jedem Reaktionsraum (1.1, 1.2, 1.3) das Zwei- bis Vierfache der Menge, die theoretisch für die Reoxidation des gesamten Sauerstoffspeichermaterials (2) erforderlich wäre, beträgt.

## Claims

1. An arrangement for carrying out intensified combustion, for a self-acting pressure increase of the combustion gases and their use in an internal combustion engine for performing mechanical work, **characterized in that** an oxygen storage material (2) is present in the combustion chamber.

2. The arrangement according to claim 1, **characterized in that**
- the combustion chamber consists of at least two reaction chambers (1.1, 1.2, 1.3), wherein each reaction chamber (1.1, 1.2, 1.3)
- contains the oxygen storage material (2),
- comprises at least one inlet (11.1, 11.2, 11.3) for fuel and an inlet for fresh air,
- comprises a first outlet (12.1, 12.2, 12.3) for discharging the oxygen-depleted air,
- comprises a second outlet (3.1, 3.2, 3.3), provided with a valve (6.1, 6.2, 6.3), for discharging the combustion gases,
- each second outlet (3.1, 3.2, 3.3) is connected with a subsequent working chamber (4) via an inlet (8), with only one respective valve (6.1, 6.2, 6.3) being open for introduction of the combustion gases into the working chamber (4).

3. The arrangement according to claim 1 or 2, **characterized in that** the oxygen storage material (2) has a reduction enthalpy for the oxygen of between 150 kJ/mol of O₂ and 350 kJ/mol of O₂.

4. The arrangement according to claim 1, **characterized in that** the oxygen storage material (2) used is Ca_{0.5}Sr_{0.5}Mn_{0.5}Fe_{0.5}O_{3.δ} granules with an open porosity of 30% by volume and a density of 3.67g/cm³.

5. The arrangement according to claims 1 to 4, **characterized in that** the oxygen storage material (2) in the form of granules is arranged as a packed bed in the reaction chamber (1.1, 1.2, 1.3).

6. The arrangement according to claims 1 to 5, **characterized in that** each reaction chamber (1.1, 1.2, 1.3) comprises a further inlet (13.1, 13.2, 13.3) for feeding liquid or gaseous water so as to achieve internal cooling of the oxygen storage material (2) and of the interior of the reaction chamber (1.1, 1.2, 1.3) and to increase the pressure of the combustion gases.

7. The arrangement according to claims 1 to 6, **characterized in that** the oxygen storage material (2) is combined with a catalyst so as to increase the reaction rate or decrease the pollutant concentration.

8. A method for carrying out intensified combustion, for a self-acting pressure increase of the combustion gases and their use in an internal combustion engine for performing mechanical work, **characterized in that**
- an oxygen storage material (2) is stored in the combustion chamber,
- fresh air is supplied from which the oxygen storage material (2) withdraws the oxygen,
- next, fuel is admitted which burns completely with the oxygen escaping from the oxygen storage material (2),
- finally, the high-pressure, high-temperature combustion gases are used to perform mechanical work.

9. The method according to claim 8 comprising at least two reaction chambers and **characterized by** the following method steps:
a) a first reaction chamber (1.1) is permeated by fresh air, so that the oxygen storage material (2) present in the reaction chamber (1.1) withdraws the oxygen from the fresh air;
b) after saturation of the oxygen storage material (2) with oxygen, the fresh air supply is interrupted and a fuel is metered into the reaction chamber (1.1), which is burned completely with the oxygen escaping from the oxygen storage material (2);
c) the pressurized combustion gases are supplied to a working chamber (4);
d) steps a) to c) are repeated, one after the other, for further reaction chambers, the number of the further reaction chambers being determined at least by the fact that the first reaction chamber (1.1) has interrupted its fresh air supply by saturation with oxygen.

10. The method according to claim 8 or 9, **characterized in that** the temperature of the oxygen storage material (2) is monitored and regulated by injecting varying amounts of water.

11. The method according to any one of claims 8 to 10, **characterized in that** the fresh air through-put in each reaction chamber (1.1, 1.2, 1.3) is two to four times the amount theoretically required for reoxidation of the entire oxygen storage material (2).

## Revendications

1. Dispositif pour la mise en oeuvre d'une combustion intensifiée, pour l'augmentation automatique de la pression des gaz de combustion et leur utilisation dans un moteur thermique destiné à accomplir du travail mécanique, **caractérisé en ce qu'**un matériau accumulateur d'oxygène (2) est présent dans la chambre de combustion.

2. Dispositif selon la revendication 1, **caractérisé en ce que**
- la chambre de combustion consiste en au moins deux chambres de réaction (1.1, 1.2, 1.3), chacune desdites chambres de réaction (1.1, 1.2, 1.3)
- contenant le matériau accumulateur d'oxygène (2),
- présentant au moins une entrée (11.1, 11.2, 11.3) de carburant et une entrée d'air frais,
- présentant une première sortie (12.1, 12.2, 12.3) d'échappement de l'air appauvri en oxygène,
- une deuxième sortie (3.1, 3.2, 3.3) d'échappement des gaz de combustion pourvue d'une vanne (6.1, 6.2, 6.3),
- chaque deuxième sortie (3.1, 3.2, 3.3) est reliée par une entrée (8) à une chambre de travail (4) en aval, une seule vanne (6.1, 6.2, 6.3) étant ouverte à chaque fois pour l'admission des gaz de combustion dans la chambre de travail (4).

3. Dispositif selon la revendication 1 ou 2, **caractérisé en ce que** le matériau accumulateur d'oxygène (2) présente une enthalpie de réduction pour l'oxygène d'entre 150 kJ/mole O₂ et 350 kJ/mole O₂.

4. Dispositif selon la revendication 1, **caractérisé en ce que** l'on utilise comme matériau accumulateur d'oxygène (2) un granulé de Ca_{0.5}Sr_{0.5}Mn_{0.5}Fe_{0.5}O_{3-δ} d'une porosité ouverte de 30 % en volume et d'une densité de 3,67 g/cm³.

5. Dispositif selon les revendications 1 à 4, **caractérisé en ce que** le matériau accumulateur d'oxygène (2) sous forme d'un granulé est disposé en vrac dans la chambre de réaction (1.1, 1.2, 1.3).

6. Dispositif selon les revendications 1 à 5, **caractérisé en ce que** chaque chambre de réaction (1.1, 1.2, 1.3) présente une entrée additionnelle (13.1, 13.2, 13.3) pour l'admission d'eau liquide ou gazeuse afin de réaliser un refroidissement interne du matériau accumulateur d'oxygène (2) et de l'intérieur de la chambre de réaction (1.1, 1.2, 1.3) et afin d'augmenter la pression des gaz de combustion.

7. Dispositif selon les revendications 1 à 6, **caractérisé en ce que** le matériau accumulateur d'oxygène (2) est combiné avec un catalyseur pour augmenter la vitesse de la réaction ou abaisser la concentration de polluants.

8. Procédé de mise en oeuvre d'une combustion intensifiée, pour l'augmentation automatique de la pression des gaz de combustion et leur utilisation dans un moteur thermique destiné à accomplir du travail mécanique, **caractérisé en ce que**
- un matériau accumulateur d'oxygène (2) est déposé dans la chambre de combustion,
- de l'air frais est introduit dont le matériau accumulateur d'oxygène (2) enlève l'oxygène,
- ensuite un carburant est introduit qui se consume complètement avec l'oxygène échappant du matériau accumulateur d'oxygène (2),
- finalement, les gaz de combustion sous haute pression et à haute température sont utilisés pour accomplir du travail mécanique.

9. Procédé selon la revendication 8, comportant au moins deux chambres de réaction, et **caractérisé par** les étapes de procédé de:
a) passer de l'air frais à travers une première chambre de réaction (1.1), de sorte que le matériau accumulateur d'oxygène (2) présent dans la chambre de réaction (1.1) enlève l'oxygène de l'air frais;
b) interrompre l'introduction d'air frais lorsque le matériau accumulateur d'oxygène (2) est saturé en oxygène, et introduire un carburant dans la chambre de réaction (1.1), ledit carburant se consumant complètement avec l'oxygène échappant du matériau accumulateur d'oxygène (2);
c) introduire les gaz de combustion sous pression dans une chambre de travail (4);
d) répéter les étapes a) à c) successivement pour des chambres de réaction additionnelles, le nombre des chambres de réaction additionnelles étant déterminé au moins par la première chambre de réaction (1.1) ayant interrompu son admission d'air frais par saturation en oxygène.

10. Procédé selon la revendication 8 ou 9, **caractérisé en ce que** la température du matériau accumulateur d'oxygène (2) est surveillée et réglée par injection de quantités d'eau variables.

11. Procédé selon l'une quelconque des revendications 8 à 10, **caractérisé en ce que** le débit d'air frais dans chaque chambre de réaction (1.1, 1.2, 1.3) est deux ou quatre fois la quantité théoriquement requise pour la réoxydation de tout le matériau accumulateur d'oxygène (2).
